# EUROPÄISCHE PATENTSCHRIFT

(11) **EP 1 309 790 B1**
(45) Veröffentlichungstag und Bekanntmachung des Hinweises auf die Patenterteilung: **21.02.2007**
(21) Anmeldenummer: 01955274.4
(22) Anmeldetag: 20.07.2001
(51) Int. Cl.: F02M 51/06, F02M 61/16

(54) **BRENNSTOFFEINSPRITZVENTIL**
FUEL INJECTION VALVE
SOUPAPE D'INJECTION DE CARBURANT

(30) Priorität: 05.08.2000 DE 10038293
(43) Veröffentlichungstag der Anmeldung: 14.05.2003
(73) Patentinhaber: ROBERT BOSCH GMBH, 70442 Stuttgart (DE)
(72) Erfinder: REITER, Ferdinand, 71706 Markgroeningen (DE)
(86) Internationale Anmeldenummer: PCT/DE2001/002766
(87) Internationale Veröffentlichungsnummer: WO 2002/012710

(56) Entgegenhaltungen:
- DE-A- 19 828 849
- DE-A- 19 849 210
- US-A- 5 613 640
- PATENT ABSTRACTS OF JAPAN vol. 010, no. 040 (M-454), 18. Februar 1986 (1986-02-18) & JP 60 192873 A (NIPPON DENSO KK), 1. Oktober 1985 (1985-10-01)
- W. BEITZ, K.H. GROTE: "DUBBEL Taschenbuch für den Maschinenbau" 1997 , SPRINGER , BERLIN, D XP002185488 ISBN 3-540-62467-8; 19. Auflage Kegelpressverbindungen Seite G27, Absatz 1.4 -Seite G30, Absatz 1.4.3; Abbildung 33G
- PATENT ABSTRACTS OF JAPAN vol. 010, no. 040 (M-454), 18. Februar 1986 (1986-02-18) & JP 60 192874 A (NIPPON DENSO KK), 1. Oktober 1985 (1985-10-01)
- PATENT ABSTRACTS OF JAPAN vol. 009, no. 333 (M-443), 27. Dezember 1985 (1985-12-27) & JP 60 164659 A (NIPPON DENSO KK), 27. August 1985 (1985-08-27)

## Beschreibung

### Stand der Technik

Die Erfindung geht aus von einem Brennstoffeinspritzventil nach der Gattung des Hauptanspruchs.

Brennstoffeinspritzventile, welche vorzugsweise zum direkten Einspritzen von Brennstoff in den Brennraum einer Brennkraftmaschine geeignet sind, sind gewöhnlich mit Ventilnadeln versehen, welche mit einem Anker, der über die Ventilnadel betätigt wird, entweder verstemmt sind oder durch zwei Hülsen, welche mit der Ventilnadel verschweißt sind, mit dem Anker in kraftschlüssiger bzw. formschlüssiger Verbindung stehen.

Nachteilig an dem Verfahren des Verstemmens des Ankers auf der Ventilnadel ist insbesondere, daß große Kräfte benötigt werden, um die Ventilnadel und den Anker sicher miteinander zu verbinden. Dabei kann es leicht zu Verformungen oder Rissen im Material des Ankers oder der Ventilnadel kommen, was später zu Fehlfunktionen beim Betrieb des Brennstoffeinspritzventils führen kann.

Werden der Anker und die Ventilnadel durch mit der Ventilnadel verschweißte Flansche miteinander verbunden, ist insbesondere der Fertigungs- und Montageaufwand von Nachteil, welcher durch die große Anzahl von Bauteilen, welche miteinander verbunden werden müssen, bedingt ist.

Aus der JP 60-192873 A ist bereits ein Brennstoffeinspritzventil zum Einspritzen von Brennstoff in ein Saugrohr einer gemischverdichtenden, fremdgezündeten Brennkraftmaschine bekannt. Das Brennstoffeinspritzventil weist einen Anker auf, der mit einer Magnetspule in einem elektromagnetischen Kreis zusammenwirkt. Mit dem Anker fest verbunden ist eine profilierte Ventilnadel, an der ein Ventilschließkörper am stromabwärtigen Ende vorgesehen ist, der zusammen mit einer Ventilsitzfläche einen Dichtsitz bildet. An dem dem Ventilschließkörper gegenüberliegenden stromaufwärtigen Ende besitzt die Ventilnadel einen Nadelkopf, der einen konusförmigen Bereich aufweist und in eine Ausnehmung des Ankers hineinragt. Der konusförmige Bereich der. Ventilnadel wirkt dabei mit der als Sackbohrung ausgebildeten konusförmigen Ausnehmung des Ankers so zusammen, dass der Anker kraft- und formschlüssig mit der Ventilnadel verbunden ist. Die konusförmige Verbindung zwischen der Ventilnadel und dem Anker wird zusätzlich durch ein radiales Verpressen gesichert.

### Vorteile der Erfindung

Das erfindungsgemäße Brennstoffeinspritzventil mit dem kennzeichnenden Merkmalen des Unabhängiges Anspruchs hat demgegenüber den Vorteil, daß durch eine konische Ausbildung des den Anker durchgreifenden Teils der Ventilnadel und eine entsprechende Ausformung der die Ventilnadel aufnehmenden Ausnehmung im Anker ein Verschweißen oder Verstemmen der beiden Bauteile nicht nötig ist.

Durch die in den abhängigen Ansprüchen aufgeführten Maßnahmen sind vorteilhafte Weiterbildungen des im Hauptanspruch angegebenen Brennstoffeinspritzventils möglich.

Von Vorteil ist insbesondere, daß die Konusverbindung im geschlossenen Zustand des Brennstoffeinspritzventils bzw. beim Schließen des Brennstoffeinspritzventils durch die Kraft der Rückstellfeder verstärkt wird.

Durch die besondere Form des kegelförmigen Bereichs der Ventilnadel sowie der korrespondierenden Form der Ausnehmung des Ankers wird vorteilhafterweise sichergestellt, daß auch beim Öffnen des Ventils die Kegelverbindung nur durch das Eigengewicht der Nadel und durch geringe hydraulische Kräfte durch den den Anker umfließenden Brennstoff beansprucht wird.

Von Vorteil ist insbesondere, daß die Herstellung des Gesamtbauteils aus Ventilnadel und Anker schnell und kostengünstig erfolgen kann, da die beiden Teile leicht herstellbar sind und keine weiteren Bauteile benötigt werden, welche durch Schweißen oder andere aufwendige Verbindungsverfahren mit der Ventilnadel verbunden werden müssen.

Von Vorteil ist außerdem, daß das zulaufseitige Ende der Ventilnadel, welches die Ankerfläche überragt, als Zentrierung für die Rückstellfeder dienen kann, welche sich an der zulaufseitigen Ankerfläche abstützt.

### Zeichnung

Ausführungsbeispiele der Erfindung sind in der Zeichnung vereinfacht dargestellt und in der nachfolgenden Beschreibung näher erläutert. Es zeigen:
- Fig. 1: einen schematischen Schnitt durch ein Brennstoffeinspritzventil gemäß dem Stand der Technik,
- Fig. 2A: einen schematischen Teilschnitt durch ein erstes Ausführungsbeispiel einer Ventilnadel mit dem daran fixierten Anker eines erfindungsgemäßen Brennstoffeinspritzventils, und
- Fig. 2B: einen schematischen Teilschnitt durch ein zweites Ausführungsbeispiel einer Ventilnadel mit dem daran fixierten Anker eines erfindungsgemäßen Brennstoffeinspritzventils.

### Beschreibung der Ausführungsbeispiele

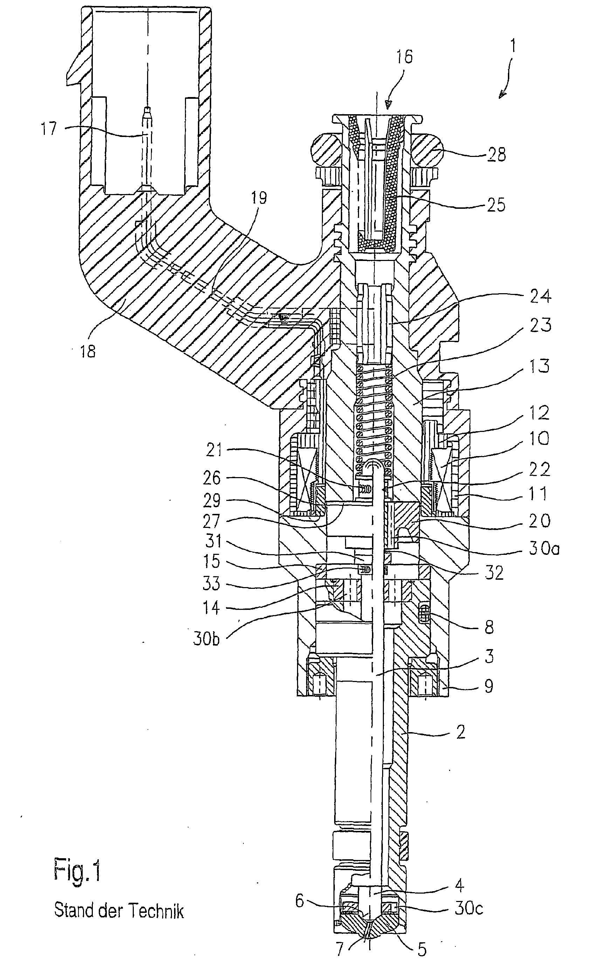

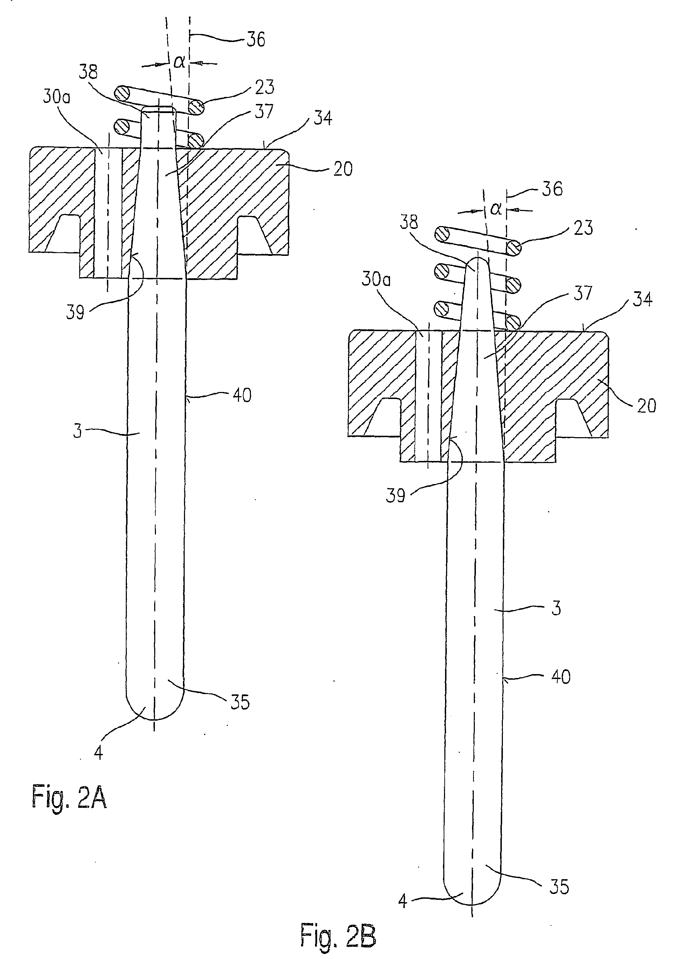

Bevor anhand der Figuren 2A und 2B zwei Ausführungsbeispiele einer Ventilnadel 3 und eines Ankers 20 eines erfindungsgemäßen Brennstoffeinspritzventils 1 näher beschrieben werden, soll zum besseren Verständnis der Erfindung zunächst anhand von Fig. 1 ein Brennstoffeinspritzventil 1 gemäß dem Stand der Technik bezüglich seiner wesentlichen Bauteile kurz erläutert werden.

Das Brennstoffeinspritzventil 1 ist in der Form eines Brennstoffeinspritzventils für Brennstoffeinspritzanlagen von gemischverdichtenden, fremdgezündeten Brennkraftmaschinen ausgeführt. Das Brennstoffeinspritzventil 1 eignet sich insbesondere zum direkten Einspritzen von Brennstoff in einen nicht dargestellten Brennraum einer Brennkraftmaschine.

Das Brennstoffeinspritzventil 1 besteht aus einem Düsenkörper 2, in welchem eine Ventilnadel 3 angeordnet ist. Die Ventilnadel 3 steht in Wirkverbindung mit einem Ventilschließkörper 4, der mit einer auf einem Ventilsitzkörper 5 angeordneten Ventilsitzfläche 6 zu einem Dichtsitz zusammenwirkt. Bei dem Brennstoffeinspritzventil 1 handelt es sich im Ausführungsbeispiel um ein nach innen öffnendes Brennstoffeinspritzventil 1, welches über eine Abspritzöffnung 7 verfügt. Der Düsenkörper 2 ist durch eine Dichtung 8 gegen den Außenpol 9 einer Magnetspule 10 abgedichtet. Die Magnetspule 10 ist in einem Spulengehäuse 11 gekapselt und auf einen Spulenträger 12 gewickelt, welcher an einem Innenpol 13 der Magnetspule 10 anliegt. Der Innenpol 13 und der Außenpol 9 sind durch einen Spalt 26 voneinander getrennt und stützen sich auf einem Verbindungsbauteil 29 ab. Die Magnetspule 10 wird über eine Leitung 19 von einem über einen elektrischen Steckkontakt 17 zuführbaren elektrischen Strom erregt. Der Steckkontakt 17 ist von einer Kunststoffummantelung 18 umgeben, die am Innenpol 13 angespritzt sein kann.

Die Ventilnadel 3 ist in einer Ventilnadelführung 14 geführt, welche scheibenförmig ausgeführt ist. Zur Hubeinstellung dient eine zugepaarte Einstellscheibe 15. An der anderen Seite der Einstellscheibe 15 befindet sich ein Anker 20. Dieser steht über einen ersten Flansch 21 kraftschlüssig mit der Ventilnadel 3 in Verbindung, welche durch eine Schweißnaht 22 mit dem ersten Flansch 21 verbunden ist. Auf dem ersten Flansch 21 stützt sich eine Rückstellfeder 23 ab, welche in der vorliegenden Bauform des Brennstoffeinspritzventils 1 durch eine Hülse 24 auf Vorspannung gebracht wird.

Ein zweiter Flansch 31, welcher mit der Ventilnadel 3 ebenfalls über eine Schweißnaht 33 verbunden ist, dient als unterer Ankeranschlag. Ein elastischer Zwischenring 32, welcher auf dem zweiten Flansch 31 aufliegt, vermeidet Prellen beim Schließen des Brennstoffeinspritzventils 1.

In der Ventilnadelführung 14, im Anker 20 und am Ventilsitz körper 5 verlaufen Brennstoffkanäle 30a bis 30c, die den Brennstoff, welcher über eine zentrale Brennstoffzufuhr 16 zugeführt und durch ein Filterelement 25 gefiltert wird, zur Abspritzöffnung 7 leiten. Das Brennstoffeinspritzventil 1 ist durch eine Dichtung 28 gegen einen nicht weiter dargestellten Zylinderkopf bzw. eine Verteilerleitung abgedichtet.

Im Ruhezustand des Brennstoffeinspritzventils 1 wird der Anker 20 über den ersten Flansch 21 an der Ventilnadel 3 von der Rückstellfeder 23 entgegen seiner Hubrichtung so beaufschlagt, daß der Ventilschließkörper 4 am Ventilsitz 6 in dichtender Anlage gehalten wird. Bei Erregung der Magnetspule 10 baut diese ein Magnetfeld auf, welches den Anker 20 entgegen der Federkraft der Rückstellfeder 23 in Hubrichtung bewegt, wobei der Hub durch einen in der Ruhestellung zwischen dem Innenpol 12 und dem Anker 20 befindlichen Arbeitsspalt 27 vorgegeben ist. Der Anker 20 nimmt den Flansch 21, welcher mit der Ventilnadel 3 verschweißt ist, und damit die Ventilnadel 3 ebenfalls in Hubrichtung mit. Der mit der Ventilnadel 3 in Wirkverbindung stehende Ventilschließkörper 4 hebt von der Ventilsitzfläche 6 ab und der über die Brennstoffkanäle 30a bis 30c zur Abspritzöffnung 7 geführte Brennstoff wird abgespritzt.

Wird der Spulenstrom abgeschaltet, fällt der Anker 20 nach genügendem Abbau des Magnetfeldes durch den Druck der Rückstellfeder 23 auf den ersten Flansch 21 vom Innenpol 13 ab, wodurch sich die Ventilnadel 3 entgegen der Hubrichtung bewegt. Dadurch setzt der Ventilschließkörper 4 auf der Ventilsitzfläche 6 auf, und das Brennstoffeinspritzventil 1 wird geschlossen.

Fig. 2 zeigt in einer auszugsweisen Schnittdarstellung ein erstes Ausführungsbeispiel der Ventilnadel 3 eines erfindungsgemäßen Brennstoffeinspritzventils 1, welche mit dem Anker 20 verbunden ist.

Im Gegensatz zu dem in Fig. 1 dargestellten Beispiel eines Brennstoffeinspritzventils 1, in welchem die Ventilnadel 3 über den Flansch 21, welcher an der Ventilnadel 3 verschweißt ist, mit dem Anker 20 in Wirkverbindung steht, ist die Ventilnadel 3 des erfindungsgemäßen Brennstoffeinspritzventils 1 so ausgeführt, daß eine kraftschlüssige Verbindung zwischen dem Anker 20 und der Ventilnadel 3 ohne Schweißen erfolgt.

Wie in Fig. 2A dargestellt, ist die Ventilnadel 3 in einem den Anker 20 durchgreifenden Bereich 37 konisch ausgeformt. Diese Formung kann beispielsweise durch Drehen oder Gießen der Ventilnadel 3 erfolgen. Eine zentrale Ausnehmung 39 des Ankers 20 ist ebenfalls konisch gestaltet, wobei die Kegelwinkel α der konischen Ausnehmung 39 des Ankers 20 und des konischen Bereiches 37 der Ventilnadel 3 gegenüber einer Geraden 36, die parallel zur Ventillängsachse verläuft, gleich sind. Die Gerade 36 kann dabei insbesondere mit der Mantelfläche 40 der Ventilnadel 3 außerhalb des konischen Bereichs 37 zusammenfallen.

Die Ausnehmung 39 des Ankers 20 kann auch so ausgeführt sein, daß nur ein Teil ihrer axialen Erstreckung konusförmig verläuft.

Die Ventilnadel 3 durchgreift somit die zentrale Ausnehmung 39 des Ankers 20 und ragt mit einem zulaufseitigen Ende 38 über eine zulaufseitige Stirnseite 34 des Ankers 20 hinaus. Das zulaufseitige Ende 38 der Ventilnadel 3 ist im vorliegenden ersten Ausführungsbeispiel zylindrisch ausgebildet, wobei der Durchmesser des zulaufseitigen Endes 38 gemäß der Verjüngung der Ventilnadel 3 durch den konischen Bereich 37 etwas geringer ist als der Durchmesser des ablaufseitigen Endes 35 der Ventilnadel 3.

Die Rückstellfeder 23 stützt sich direkt auf der zulaufseitigen Stirnseite 34 des Ankers 20 ab, im Gegensatz zu der in Fig. 1 beschriebenen Ausführungsart, wo sich die Rückstellfeder 23 auf dem Flansch 21 abstützt, welcher wiederum mit der Ventilnadel 3 verschweißt ist. Die Rückstellfeder 23 wird durch das die zulaufseitige Stirnseite 34 des Ankers 20 überragende zulaufseitige Ende 38 der Ventilnadel 3 in einer zentrierten Position gehalten und kann somit während des Betriebs des Brennstoffeinspritzventils 1 nicht in radialer Richtung verrutschen.

Die Ventilnadel 3 und der Anker 20 werden durch einen einzigen Fügevorgang miteinander verbunden. Dabei wird der Anker 20 mit seiner konischen Ausnehmung 39 auf die Ventilnadel 3 gesteckt, bis sich der konische Bereich 37 der Ventilnadel 3 in der konischen Ausnehmung 39 des Ankers 20 befindet. Danach wird der Anker 20 durch eine definierte Kraft auf die Ventilnadel 3 aufgedrückt.

Wird das Brennstoffeinspritzventil 1 geöffnet, wird der Anker 20 in Richtung auf den nicht dargestellten Innenpol 13 gezogen. Die Konusverbindung zwischen der Ventilnadel 3 und dem Anker 20 wird dabei lediglich durch das Gewicht der Ventilnadel 3 sowie durch geringfügige hydraulische Kräfte, welche durch den das Brennstoffeinspritzventil 1 durchströmenden Brennstoff auf die zulaufseitige Stirnseite 34 des Ankers 20 ausgeübt werden, beansprucht. Beim Schließen des Brennstoffeinspritzventils 1 wird die Konusverbindung durch die hohe Kraft der Rückstellfeder 23, welche sich auf der zulaufseitigen Stirnseite 34 des Ankers 20 abstützt, unterstützt, da die Rückstellfeder 23 den Anker 20 auf die Ventilnadel 3 und damit die Ventilnadel 3 in den Dichtsitz drückt.

Fig. 2B zeigt in gleicher Darstellung wie Fig. 2A ein zweites Ausführungsbeispiel der Ventilnadel 3 mit dem daran fixierten Anker 20.

Im Gegensatz zum ersten Ausführungsbeispiel in Fig. 2A ist das zulaufseitige Ende 38 der Ventilnadel 3 im vorliegenden Ausführungsbeispiel nicht zylindrisch, sondern konisch als Fortsetzung des konischen Bereichs 37 ausgebildet. Der Kegelwinkel α zwischen dem konischen Bereich 37 und der Geraden 36 bleibt dabei konstant. Dieses Ausführungsbeispiel hat zusätzlich den Vorteil, daß die Herstellung der Ventilnadel 3 weiter vereinfacht wird, da der konische Bereich 37 und das zulaufseitige Ende 38 der Ventilnadel 3 in einem Arbeitsvorgang bearbeitet werden können.

Das zulaufseitige Ende 38 der Ventilnadel 3 überragt wiederum die zulaufseitige Stirnseite 34 des Ankers 20 und sorgt dadurch für die Zentrierung der Rückstellfeder 23.

Das ablaufseitige Ende 35 der Ventilnadel 3 kann in den in Fig. 2A und 2B beschriebenen Ausführungsbeispielen der Ventilnadel 3 in beliebiger Weise mit einem Ventilschließkörper 4 gemäß der Bauweise eines beispielsweise nach innen oder außen öffnenden Brennstoffeinspritzventils 1 versehen sein. Insbesondere empfiehlt sich die einstückige Ausbildung von Ventilnadel 3 und Ventilschließkörper 4 zur weiteren Vereinfachung der Herstellung.

Die Erfindung ist nicht auf die dargestellten Ausführungsbeispiele beschränkt und auch für andere Ventilnadeln 3, beispielsweise für Doppel- und Hohlnadeln in Verbindung mit beliebigen Ankerformen, beispielsweise mit Tauch- und Flachankern, sowie beliebige Bauweisen von Brennstoffeinspritzventilen anwendbar.

## Patentansprüche

1. Brennstoffeinspritzventil (1), insbesondere zum direkten Einspritzen von Brennstoff in den Brennraum einer gemischverdichtenden, fremdgezündeten Brennkraftmaschine, mit einem Anker (20), der mit einer Magnetspule (10) zusammenwirkt, und einer mit dem Anker (20) verbundenen Ventilnadel (3), an der ein Ventilschließkörper (4) vorgesehen ist, der zusammen mit einer Ventilsitzfläche (6) einen Dichtsitz bildet, wobei die Ventilnadel (3) einen konusförmigen Bereich (37) aufweist und der konusförmige Bereich (37) der Ventilnadel (3) mit einer konusförmigen Ausnehmung (39) des Ankers (20) so zusammenwirkt, dass der Anker (20) kraft- und formschlüssig mit der Ventilnadel (3) verbunden ist,
**dadurch gekennzeichnet,**
**dass** ein zulaufseitiges Ende (38) der Ventilnadel (3) über eine zulaufseitige Stirnseite (34) des Ankers (20) hinausragt, so dass eine an dem Anker (20) angreifende Rückstellfeder (23) radial arretiert ist.

2. Brennstoffeinspritzventil nach Anspruch 1,
**dadurch gekennzeichnet,**
**dass** das zulaufseitige Ende (38) der Ventilnadel (3) zylindrisch ausgebildet ist.

3. Brennstoffeinspritzventil nach Anspruch 1,
**dadurch gekennzeichnet,**
**dass** das zulaufseitige Ende (38) der Ventilnadel (3) konusförmig ausgebildet ist.

4. Brennstoffeinspritzventil nach Anspruch 3,
**dadurch gekennzeichnet,**
**dass** ein Kegelwinkel α des zulaufseitigen Endes (38) der Ventilnadel (3) mit einem Kegelwinkel α des konusförmigen Bereichs (37) der Ventilnadel (3) übereinstimmt.

5. Brennstoffeinspritzventil nach einem der Ansprüche 1 bis 4,
**dadurch gekennzeichnet,**
**dass** der Anker (20) durch Aufpressen auf die Ventilnadel (3) mit der Ventilnadel (3) verbindbar ist.

6. Brennstoffeinspritzventil nach einem der vorhergehenden Ansprüche,
**dadurch gekennzeichnet,**
**dass** die Ausnehmung (39) des Ankers (20) über ihre gesamte axiale Erstreckung konisch ausgeführt ist.

7. Brennstoffeinspritzventil nach einem der Ansprüche 1 bis 5,
**dadurch gekennzeichnet,**
**dass** die Ausnehmung (39) des Ankers (20) über einen Teil ihrer axialen Erstreckung konisch ausgeführt ist.

## Claims

1. Fuel injection valve (1), in particular for directly injecting fuel into the combustion chamber of a mixture-compressing, spark-ignition internal combustion engine, having an armature (20) which interacts with a magnet coil (10), and having a valve needle (3) which is connected to the armature (20) and on which is provided a valve closing body (4) which forms a sealing seat together with a valve seat face (6), the valve needle (3) having a conical region (37), and the conical region (37) of the valve needle (3) interacting with a conical recess (39) of the armature (20) in such a way that the armature (20) is connected to the valve needle (3) in a force-fitting and form-fitting manner,
**characterized**
**in that** an inlet-side end (38) of the valve needle (3) projects beyond an inlet-side end side (34) of the armature (20), so that a return spring (23) which engages on the armature (20) is locked radially.

2. Fuel injection valve according to Claim 1,
**characterized**
**in that** the inlet-side end (38) of the valve needle (3) is cylindrical.

3. Fuel injection valve according to Claim 1,
**characterized**
**in that** the inlet-side end (38) of the valve needle (3) is conical.

4. Fuel injection valve according to Claim 3,
**characterized**
**in that** a cone angle α of the inlet-side end (38) of the valve needle (3) corresponds to a cone angle α of the conical region (37) of the valve needle (3).

5. Fuel injection valve according to one of Claims 1 to 4,
**characterized**
**in that** the armature (20) can be connected to the valve needle (3) by being pressed onto the valve needle (3).

6. Fuel injection valve according to one of the preceding claims,
**characterized**
**in that** the recess (39) of the armature (20) is conical over its entire axial extent.

7. Fuel injection valve according to one of Claims 1 to 5,
**characterized**
**in that** the recess (39) of the armature (20) is conical over part of its axial extent.

## Revendications

1. Injecteur de carburant (1), en particulier pour injecter directement du carburant dans la chambre de combustion d'un moteur à combustion à allumage externe par compression de mélange, avec un induit (20) qui coopère avec une bobine magnétique (10) et une aiguille d'injection (3) reliée à l'induit (20), portant un obturateur de soupape (4) qui forme un siège d'étanchéité avec une surface de siège de soupape (6), l'aiguille d'injection (3) présentant une région conique (37) collaborant avec un évidement conique (39) de l'induit (20) de telle sorte que l'induit (20) est relié par adhérence et par complémentarité de formes avec l'aiguille d'injection (3),
**caractérisée en ce qu'**
une extrémité (38) côté admission de l'aiguille d'injection (3) dépasse de la face frontale (34) côté admission de l'induit (20), de sorte qu'un ressort de rappel (23) appliqué à l'induit (20) est arrêté radialement.

2. Injecteur selon la revendication 1,
**caractérisée en ce que**
l'extrémité (38) côté admission de l'aiguille d'injection (3) est cylindrique.

3. Injecteur selon la revendication 1,
**caractérisée en ce que**
l'extrémité (38) côté admission de l'aiguille d'injection (3) est conique.

4. Injecteur selon la revendication 3,
**caractérisée en ce qu'**
un angle de cône α de l'extrémité (38) côté admission de l'aiguille d'injection (3) coïncide avec un angle de cône α de la région conique (37) de l'aiguille d'injection (3).

5. Injecteur selon une des revendications 1 à 4,
**caractérisée en ce que**
l'induit (20) peut être relié à l'aiguille d'injection (3) par engagement par pression.

6. Injecteur de carburant selon une des revendications précédentes,
**caractérisée en ce que**
l'évidement (39) de l'induit (20) est conique sur toute son extension axiale.

7. Injecteur de carburant selon une des revendications 1 à 5,
**caractérisée en ce que**
l'évidement (39) de l'induit (20) est conique sur une partie de son extension axiale.
